# EUROPEAN PATENT SPECIFICATION

(11) **EP 3 087 398 B1**
(45) Date of publication and mention of the grant of the patent: **21.07.2021**
(21) Application number: 14875123.3
(22) Date of filing: 23.12.2014
(51) Int. Cl.: G01P 13/00, H02K 5/136

(54) **INFRARED GESTURE DETECTION FOR USE IN EXPLOSION PROOF ENCLOSURE**
INFRAROT-GESTENERKENNUNG ZUR VERWENDUNG IN EINEM EXPLOSIONSGESCHÜTZTEN GEHÄUSE
DÉTECTION DE GESTES À INFRAROUGES DESTINÉE À ÊTRE UTILISÉE DANS UN CAISSON ANTIDÉFLAGRANT

(30) Priority: 23.12.2013 US 201314139610
(43) Date of publication of application: 02.11.2016
(73) Proprietor: Sensia Netherlands B.V., 2514 JG The Hague (NL)
(72) Inventor: DIEDERICHS, Robert, Edmonton, Alberta T6B 2H5 (CA); MADDEN, Thomas M., Duncan, Oklahoma 73533 (US); PETERS, Daniel, Edmonton, Alberta T6B 2H5 (CA)
(74) Representative: Gill Jennings & Every LLP
(86) International application number: PCT/US2014/072215
(87) International publication number: WO 2015/100352

(56) References cited:
- EP-A1- 2 626 769
- JP-A- 2001 320 615
- JP-A- 2006 319 726
- US-A- 5 914 489
- US-A1- 2004 050 188
- US-A1- 2007 089 484
- US-A1- 2010 329 306
- None

## Description

### BACKGROUND

Different protection techniques may be used to ensure the safe operation of electrical devices in hazardous areas. A hazardous area is generally one where flammable gases and/or particles are present, or could be present. Two common protection methods to prevent the accidental ignition of flammable gases or particles include using electrical equipment that is rated as explosion proof and/or intrinsically safe. Explosion proof refers to equipment that is designed to contain an internal explosion resulting from the flammable gases and particulate entering the electronics. This ability to contain an internal explosion prevents subsequent ignition of the surrounding atmosphere. Intrinsic safety requirements are intended to guarantee that instrument operation or failure cannot cause ignition, such as if the instrument is properly installed in an environment that contains explosive gases. This is accomplished by limiting the maximum energy stored in the device in a worst case failure situation. Excessive energy discharge may lead to sparking or excessive heat, which could ignite an explosive environment in which the transmitter may be operating.

Such techniques and tools are highly useful in the process control and measurement industry to allow operators to conveniently communicate with and/or interrogate field devices in a given process installation. Examples of such process installations include petroleum, pharmaceutical, chemical, pulp, and other processing installations. In such installations, the process control and measurement network may include tens or even hundreds of various explosion proof and intrinsically safe field devices that periodically require maintenance to ensure that such devices are functioning properly and/or calibrated. However, when one or more errors in the process control and measurement installation is detected, the field devices may need to be recalibrated and/or updated to diagnose such errors in the field.

For example, a device used out in the field may need to be updated with new parameters, such as parameters used when calculating flow. If the device is not intrinsically safe, the device may not be opened until the surrounding area is declassified as non-hazardous. As such, a user must interact with the device through pre-designed inputs, such as explosion proof control switches, to recalibrate or update the device, which may be inherently limiting. Accordingly, it remains a priority to increase the capability of communication with a device, particularly in hazardous environments commonly associated with devices that include explosion proof enclosures and/or are intrinsically safe.
US2007/089484 describes a he gas chromatograph including an explosion-proof housing and a transparent panel secured to the housing. The display screen is disposed in the housing and is visible through the transparent panel. A gas chromatograph (GC) assembly is disposed in the housing and includes a column for separating components of the gas and a detector for detecting the components of the gas.
EP2626769 describes a device for receiving reflectance-based input. An electronic device includes a plurality of electromagnetic radiation emitting devices and one or more electromagnetic radiation receiving devices for receiving reflected light from the electromagnetic radiation emitting devices.

### BRIEF DESCRIPTION OF THE DRAWINGS

For a detailed description of the preferred embodiments of the invention, reference will now be made to the accompanying drawings in which:

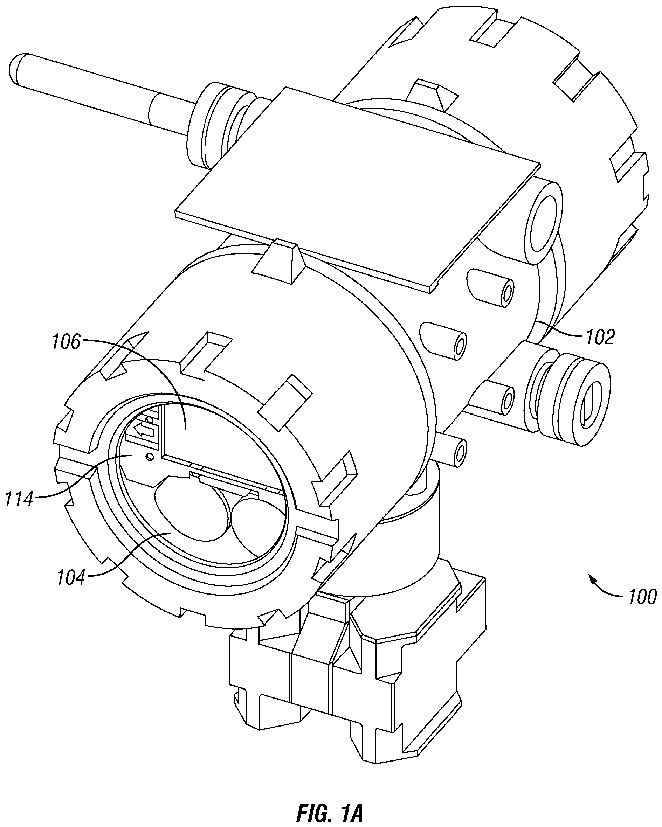

FIG. 1A shows a perspective view of an apparatus when assembled in accordance with one or more embodiments of the present disclosure;

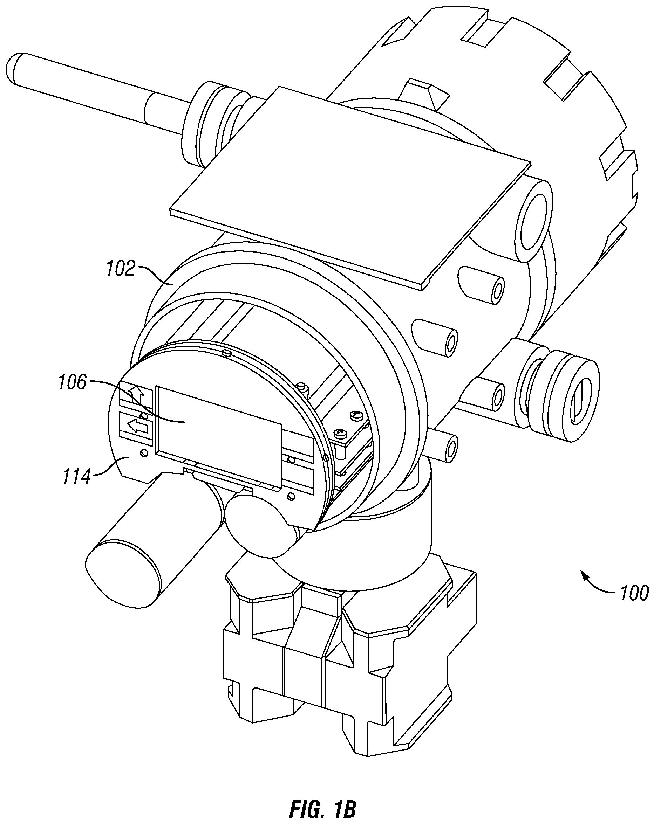

FIG. 1B shows a perspective view of an apparatus with a front cover of the apparatus removed in accordance with one or more embodiments of the present disclosure;

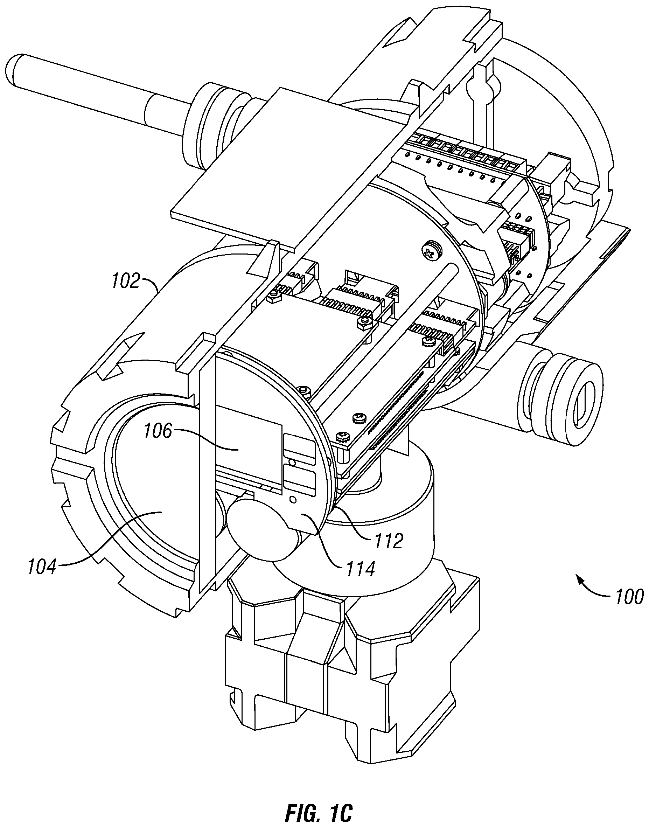

FIG. 1C shows a perspective view of an apparatus with a portion of an explosion proof enclosure removed in accordance with one or more embodiments of the present disclosure; and
FIG. ID shows an exploded view of components of an apparatus in accordance with one or more embodiments of the present disclosure.

### DETAILED DESCRIPTION

Accordingly, there is provided a control apparatus according to claim 1. Preferred features are recited in the dependent claims. The following discussion is directed to various embodiments of the invention. The drawing figures are not necessarily to scale. Certain features of the embodiments may be shown exaggerated in scale or in somewhat schematic form and some details of conventional elements may not be shown in the interest of clarity and conciseness. It is to be fully recognized that the different teachings of the embodiments discussed below may be employed separately or in any suitable combination to produce desired results.

Certain terms are used throughout the following description and claims to refer to particular features or components. As one skilled in the art will appreciate, different persons may refer to the same feature or component by different names. This document does not intend to distinguish between components or features that differ in name but are the same structure or function. The drawing figures are not necessarily to scale. Certain features and components herein may be shown exaggerated in scale or in somewhat schematic form and some details of conventional elements may not be shown in interest of clarity and conciseness.

In the following discussion and in the claims, the terms "including" and "comprising" are used in an open-ended fashion, and thus should be interpreted to mean "including, but not limited to...." Also, the term "couple" or "couples" is intended to mean either an indirect or direct connection. In addition, the terms "axial" and "axially" generally mean along or parallel to a central axis (e.g., central axis of a body or a port), while the terms "radial" and "radially" generally mean perpendicular to the central axis. For instance, an axial distance refers to a distance measured along or parallel to the central axis, and a radial distance means a distance measured perpendicular to the central axis. The use of "top," "bottom," "above," "below," and variations of these terms is made for convenience, but does not require any particular orientation of the components.

Accordingly, disclosed herein is an apparatus, such as a controller and/or a device including electronics components, in which the apparatus is used within a hazardous environment. As such, the apparatus may be intrinsically safe, thereby limiting the amount of energy consumed by the apparatus. The apparatus may additionally or alternatively include an explosion proof enclosure to safely discharge the explosion or fire within the instrument housing.

The apparatus includes a protective glass window included with the explosion proof enclosure, such as to enable a user to interact with the apparatus through the protective glass window. A display is included with the apparatus and positioned within the explosion proof enclosure such that a user may receive messages and/or otherwise interact with the apparatus through the protective glass window. Further, an infrared transceiver, such as an infrared transmitter and an infrared receiver are positioned within the explosion proof enclosure. The infrared transmitter is used to transmit a transmitted infrared light signal out through the protective glass window, and the infrared receiver is used to receive a reflected infrared light signal through the protective glass window. The reflected infrared light signal includes or is formed as a reflection of the transmitted infrared light signal that corresponds to a gesture from a user. As such, the transmitted infrared light signal may reflect off of a gesture from a user, such as a hand gesture, thereby reflecting the transmitted infrared light signal back into the intrinsically safe apparatus through the protective glass window of the explosion proof enclosure. In one or more embodiments, the apparatus may include one or more infrared transceivers, such as a first and second infrared transmitter and a first and second infrared receiver. The first infrared transmitter and the first infrared receiver may transmit and receive infrared signals between each other, and the second infrared transmitter and the second infrared receiver may transmit and receive infrared signals between each other. As such, the operation of the first infrared transmitter and the first infrared receiver may be strobed with the operation of the second infrared transmitter and the second infrared receiver. In such an embodiment, when the first infrared transmitter and the first infrared receiver are in operation to transmit and receive infrared signals therebetween, the second infrared transmitter and the second infrared receiver may not then be in operation to transmit and receive infrared signals therebetween. A processing unit is positioned within the explosion proof enclosure to parse the reflected infrared light signal into a corresponding control function for the apparatus.

Further, in one or more embodiments, the apparatus may include one or more infrared shields. For example, an infrared shield may be positioned adjacent the infrared transmitter and/or the infrared receiver. In such an embodiment, the transmitted infrared light signal may travel through the infrared shield before passing through the protective glass window out the explosion proof enclosure, and/or the reflected infrared light signal may travel through the infrared shield after passing through the protective glass window into the explosion proof enclosure.

Referring now to FIGS. 1A-1D, multiple views of an intrinsically safe apparatus 100 for use within a hazardous environment in accordance with one or more embodiments of the present disclosure are shown. FIG. 1A shows a perspective view of the apparatus 100 when assembled; FIG. 1B shows a perspective view of the apparatus 100 with a front cover of the apparatus 100 removed; FIG. 1C shows a perspective view of the apparatus 100 with a portion of an explosion proof enclosure 102 removed to view internal components of the apparatus; and FIG. ID shows an exploded view of components of the apparatus 100.

As discussed, the apparatus 100 may include an explosion proof enclosure 102, such as to house internal components of the apparatus 100. The explosion proof enclosure 102 may include a protective glass window 104, such as to enable a user to interact with the apparatus 100 through the protective glass window 104 of explosion proof housing 102. For example, the apparatus 100 may include a display 106 positioned within the explosion proof housing 102. The display 106 is user-viewable such that the display may be able to interact with a user such that a user may receive messages and/or otherwise interact with the display 106 of the apparatus 100 through the protective glass window 104. An example of a display in accordance with the present disclosure may be a transflective liquid crystal display (LCD).

As shown particularly in FIG. ID, the apparatus 100 may further include one or more infrared transmitters 108 and one or more infrared receivers 110. In this embodiment, the apparatus 100 may include a first infrared transmitter 108A operable with a first infrared receiver 110A, and may further include a second infrared transmitter 108B operable with a second infrared receiver 110B. However, the present disclosure is not so limited, as only one infrared transmitter and one infrared receiver may be included within an embodiment of the present disclosure, or more than two infrared transmitters and infrared receivers may be used without departing from the scope of the present disclosure.

The first infrared transmitter 108A and the first infrared receiver 110A are positioned within the explosion proof enclosure 102. For example, in an embodiment in which the apparatus 100 includes a circuit board 112 within the explosion proof enclosure 102, the first infrared transmitter 108A and/or the first infrared receiver 110A may be operably coupled to and/or positioned on the circuit board 112. The first infrared transmitter 108A may be used to transmit a transmitted infrared light signal out through the protective glass window 104 of the explosion proof enclosure 102, and the first infrared receiver 110A may be used to receive a reflected infrared light signal through the protective glass window 104 of the explosion proof enclosure 102. In such an embodiment, the reflected infrared light signal may include or be formed as a reflection of the transmitted infrared light signal that corresponds to a gesture from a user. As such, the transmitted infrared light signal from the first infrared transmitter 108A may reflect off of a gesture from a user, such as a hand gesture, thereby reflecting the transmitted infrared light signal back into the apparatus 100 through the protective glass window 104 of the explosion proof enclosure 102 to be received by the first infrared receiver 110A.

Similarly, the second infrared transmitter 108B and the second infrared receiver 110B are positioned within the explosion proof enclosure 102. For example, the second infrared transmitter 108B and/or the second infrared receiver 110B may be operably coupled to and/or positioned on the circuit board 112. The second infrared transmitter 108B may be used to transmit a transmitted infrared light signal out through the protective glass window 104 of the explosion proof enclosure 102, and the second infrared receiver 110B may be used to receive a reflected infrared light signal through the protective glass window 104 of the explosion proof enclosure 102. In such an embodiment, the reflected infrared light signal may include or be formed as a reflection of the transmitted infrared light signal that corresponds to a gesture from a user. As such, the transmitted infrared light signal from the second infrared transmitter 108B may reflect off of a gesture from a user, thereby reflecting the transmitted infrared light signal back into the apparatus 100 through the protective glass window 104 of the explosion proof enclosure 102 to be received by the second infrared receiver 110B.

In accordance with one or more embodiments of the present disclosure. An infrared light signal may include a continuous wave signal, a pulsed wave at one or more different frequencies, one or more short bursts of light at one or more pulsed frequencies, and/or may include different schemes for different light conditions, such as when operating during normal daylight conditions, night-time conditions, and/or dusk or dawn conditions.

Further, in one or more embodiments, an apparatus in accordance with the present disclosure may include a processing unit, a storage medium, and/or other electrical components for the operation of the apparatus without departing from the scope of the present disclosure. For example, the apparatus 100 may include a processing unit, such as positioned within the explosion proof enclosure and/or operably coupled to the apparatus 100. In such an embodiment, the processing unit may be used to parse the reflected infrared light signals into a corresponding control function for the apparatus. Further, the apparatus 100 may include a storage medium, such as positioned within the explosion proof enclosure and/or operably coupled to the apparatus 100. In such an embodiment, the storage medium may be used to store a relationship table of gestures and reflected infrared light signals with associated control functions for the gestures or reflected infrared light signals. As such, when the infrared receiver 110 receives a reflected infrared light signal, the electrical components of the apparatus 100, such as the processing unit and the storage medium, may work together to parse the reflected infrared light signal into a control function for the apparatus 100.

An example of a gesture from a user may include one or more hand motions. For example, a user may move a hand horizontally (e.g., left-to-right and/or right-to-left) with respect to the apparatus 100, such as across the display 106 of the apparatus 100. In another example, a user may move a hand away from and towards to the apparatus 100. Further, in another example, a user may have a gesture that covers the infrared receiver 110 of the apparatus 100, such as to power the apparatus 100 on or off. However, in one or more embodiments, a user may avoid moving a hand vertically (e.g., top-to-bottom and/or bottom-to-top) with respect to the apparatus 100, as the apparatus 100 may have difficulty distinguishing such hand motions and gestures from other hand motions or gestures. Accordingly, such gestures may correspond to different control functions for the apparatus 100. For example, control functions may be used to control the apparatus 100 and/or control components that are operably coupled to and connected to the apparatus 100, such as other components that may be connected to the apparatus 100 through a wired or wireless network.

As an apparatus in some embodiments in accordance with the present disclosure may include two or more sets of infrared transmitters and infrared receivers, the operation of the sets of infrared transmitters and infrared receivers may be strobed with respect to each other. For example, with reference to FIG. ID, the first infrared transmitter 108A and the first infrared receiver 110A may transmit and receive infrared signals between each other, and the second infrared transmitter 108B and the second infrared receiver 110B may transmit and receive infrared signals between each other. As such, the operation of the first infrared transmitter 108A and the first infrared receiver 110A may be strobed and alternate with the operation of the second infrared transmitter 108B and the second infrared receiver 110B. In such an embodiment, when the first infrared transmitter 108A and the first infrared receiver 110A are in operation to transmit and receive infrared signals therebetween, the second infrared transmitter 108B and the second infrared receiver 110B may not then be in operation to transmit and receive infrared signals therebetween, and vice-versa. In such an embodiment, the operation of the first infrared transmitter 108A with the first infrared receiver 110A may be intermittent and alternate with the operation of the second infrared transmitter 108B with the second infrared receiver 110B. The length of each strobe of operation between the sets of infrared transmitters and infrared receivers may be for smaller amounts of time, such as in the microseconds range, may be for larger amounts of time, such as in the seconds range, and/or may be adjusted as desired. Accordingly, an apparatus may include multiple infrared transmitters and receivers that are offset from each other, thereby enabling an apparatus of the present disclosure to be capable of stereographic gesture detection.

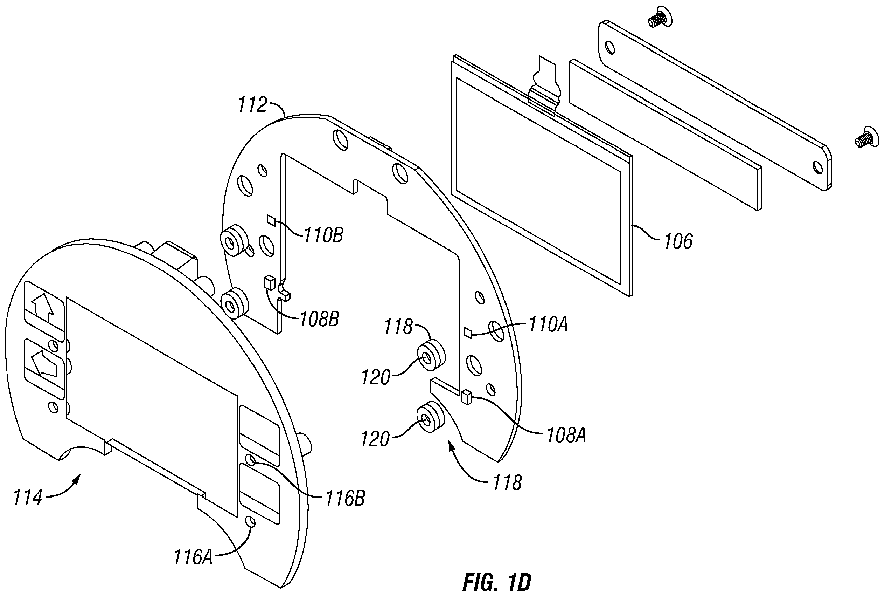

In accordance with one or more embodiments, the apparatus 100 of the present disclosure may include the infrared transmitter 108 and the infrared receiver 110 as separate components, or the infrared transmitter 108 and the infrared receiver 110 may be included within a single component, such as a transceiver. For example, with respect to FIG. 1D, the first infrared transmitter 108A and the first infrared receiver 110A may be formed as separate components, as shown, or the first infrared transmitter 108A and the first infrared receiver 110A may be formed as a single component as a first infrared transceiver. Similarly, the second infrared transmitter 108B and the second infrared receiver 110B may be formed as separate components, as shown, or the second infrared transmitter 108B and the second infrared receiver 110B may be formed as a single component as a second infrared transceiver.

Referring still to FIGS. 1A-1D, the apparatus 100 may further include a panel 114 included and positioned within the explosion proof enclosure 102. The panel 114, which may be formed from or include transparent thermoplastic, such as Plexiglas, may be positioned between the protective glass window 104 and the infrared transmitter 108 and the infrared receiver 110. Accordingly, the panel 114 may include one or more apertures 116 formed therethrough. For example, the panel 114 may include an infrared transmitter aperture 116A to transmit the transmitted infrared light signal from the infrared transmitter 108 through the panel 114, and may further include an infrared receiver aperture 116 to receive the reflected infrared light signal through the panel 114 and to the infrared receiver 110.

Further, as shown particularly in FIG. 1D, the apparatus 100 may include one or more infrared shields 118. For example, an infrared shield 118 may be used to prevent ambient infrared light and/or signals from being transmitted from the infrared transmitter 108 and/or received by the infrared receiver 110. The infrared shield 118 may be used to shield the infrared transmitter from infrared light interfering with the transmitted infrared light signal passing through the infrared shield 118, and/or the infrared shield 118 may be used to shield the infrared receiver from infrared light interfering with the reflected infrared light signal passing through the infrared shield 118. As such, an infrared shield 118 may be positioned adjacent the infrared transmitter 108 and/or received by the infrared receiver 110, such as positioned about the infrared transmitter 108 and/or received by the infrared receiver 110. In the embodiment shown in FIG. 1D, the apparatus 100 may include an infrared shield 118 for each one of the first infrared transmitter 108A, the first infrared receiver 110A, the second infrared transmitter 108B, and the second infrared receiver 110B.

One or more infrared shields may be used in accordance with one or more embodiments of the present disclosure. An infrared shield may be used to prevent infrared light interference, such as ambient infrared light and/or fugitive transmitted infrared light, from interfering with one or more infrared components of the present disclosure. Accordingly, in one embodiment, an infrared shield may prevent infrared light from communicating with an infrared receiver before reflecting off of an external object. An infrared shield 118 in accordance with the present disclosure may include a conduit such that an aperture 120 is formed through the infrared shield 118. As such, an infrared shield 118 may be positioned between the infrared transmitter 108 and the panel 114 such that a transmitted infrared light signal from the infrared transmitter 108 may pass through the aperture 120 of the infrared shield 118 and through the infrared transmitter aperture 116A of the panel 114. Further, an infrared shield 118 may be positioned between the infrared receiver 110 and the panel 114 such that a reflected infrared light signal may pass through the infrared receiver aperture 116B of the panel 114 and through the aperture 120 of the infrared shield 118 to be received by the infrared receiver 110. As such, an infrared shield in accordance with the present disclosure may be formed from and/or include rubber or another resilient material.

As such, in accordance with one or more embodiments of the present disclosure, "explosion proof," as used herein, is used in a context consistent with the National Fire Protection Association (NFPA) and the National Electric Code (NEC®), both of which have helped define the term "explosion proof." Definitions for several types of protection techniques acceptable when designing products for use in hazardous (classified) locations include, but are not limited to: explosion proof, dust ignition proof, dust tight, purged/pressurized, intrinsically safe, and hermetically sealed. These definitions set the criteria that must be met by all components installed in hazardous (classified) locations. As such, in accordance with one or more embodiments, to meet the criteria for the explosion proof rating, an enclosure is be able to contain any explosion originating within its housing and to prevent sparks from within its housing from igniting vapors, gases, dust, and/or fibers in the air surrounding it. Therefore, explosion proof, when referring to electrical enclosures, does not mean that it is able to withstand an exterior explosion. Instead, it is the enclosures ability to prevent an internal spark or explosion from causing a much larger blast. Additionally, in one or more embodiments, an explosion proof enclosure is able to meet the temperature requirements of the specific application in which it is to be installed. This means that the operating temperature of the instrument (and its enclosure) or other component cannot be greater than the lowest ignition/combustion temperature of the gases or dusts in the atmosphere where the component is to be installed.

An apparatus in accordance with the present disclosure may provide one or more of the following advantages. For example, an apparatus of the present disclosure may be used within an ambient light environment such that ambient light does not adversely affect the apparatus. For example, in one or more embodiments, an apparatus in accordance with the present disclosure may in passive infrared technology, such as passive thermal imaging, such that the apparatus may be used within an ambient light and naturally lit environment. However, the present disclosure is not so limited, as in one or more embodiments, an apparatus in accordance with the present disclosure may also incorporate and use active infrared technology. Further, an apparatus in accordance with the present disclosure may be intrinsically safe such that the apparatus may be used within a hazardous environment. For example, an apparatus as discussed and described above may be limited in the maximum energy stored, power consumption, and/or used with the apparatus to prevent sparking or excessive heat.

Although the present invention has been described with respect to specific details, it is not intended that such details should be regarded as limitations on the scope of the invention, except to the extent that they are included in the accompanying claims.

## Claims

1. A control apparatus (100), comprising:
an explosion proof enclosure (102) comprising a protective glass window (104);
a user-viewable display (106) positioned within the enclosure;
an infrared transmitter (108) positioned within the enclosure to transmit a transmitted infrared light signal out of the enclosure through the protective glass window;
the control apparatus being **characterized by**:
an infrared receiver (110) positioned within the enclosure to receive a reflected infrared light signal in through the protective glass window, the reflected infrared light signal comprising a reflection of the transmitted infrared light signal corresponding to a gesture from a user; and
a processing unit positioned within the enclosure to process a signal corresponding to the reflected infrared light signal and send a corresponding control signal to a control function for the apparatus.

2. The apparatus of claim 1, further comprising a panel (114) positioned within the enclosure between the protective glass window and the infrared transmitter and the infrared receiver.

3. The apparatus of claim 2, wherein the panel comprises:
an infrared transmitter aperture to allow transmission of the transmitted infrared light signal through the panel; and
an infrared receiver aperture to allow reception of the reflected infrared light signal through the panel.

4. The apparatus of claim 1, further comprising an infrared shield (118) positioned adjacent at least one of the infrared transmitter and the infrared receiver to shield the at least one of the infrared transmitter and the infrared receiver from infrared light interfering with at least one of the transmitted infrared light signal and the reflected infrared light signal.

5. The apparatus of claim 4, wherein the infrared shield comprises a conduit for the at least one of the transmitted infrared light signal and the reflected infrared light signal to pass through.

6. The apparatus of claim 1, wherein the infrared transmitter and the infrared receiver are integrated as a single infrared transceiver.

7. The apparatus of claim 1, further comprising:
a second infrared transmitter (108B) positioned within the enclosure to transmit a second transmitted infrared light signal out through the protective glass window;
a second infrared receiver (108A) positioned within the enclosure to receive a second reflected infrared light signal in through the protective glass window, the second reflected infrared light signal comprising a reflection of the second transmitted infrared light signal corresponding to a gesture from the user; and
wherein the processing unit is configured to parse the second reflected infrared light signal into a corresponding second control function for the apparatus.

8. The apparatus of claim 7, wherein operation of the first infrared transmitter and the first infrared receiver is strobed with operation of the second infrared transmitter and the second infrared receiver.

9. The apparatus of claim 1, wherein the gesture from the user comprises at least one of a hand motion across the display with respect to the apparatus, a hand motion towards or away the display with respect to the apparatus, and a hand motion that covers at least a portion of the apparatus.

10. The apparatus of claim 1, further comprising:
a circuit board (112) positioned within the enclosure with the infrared transmitter and the infrared receiver operably coupled to the circuit board; and
a storage medium positioned within the enclosure to store a relationship table of gestures and associated control functions for the gestures.

## Patentansprüche

1. Steuervorrichtung (100), die Folgendes umfasst:
ein explosionsgeschütztes Gehäuse (102), das ein Schutzglasfenster (104) umfasst;
eine für den Benutzer sichtbare Anzeige (106), die innerhalb des Gehäuses angeordnet ist;
einen Infrarotsender (108), der innerhalb des Gehäuses angeordnet ist, um ein übertragenes Infrarotlichtsignal aus dem Gehäuse durch das Schutzglasfenster zu übertragen;
wobei die Steuervorrichtung durch Folgendes gekennzeichnet ist:
einen Infrarotempfänger (110), der innerhalb des Gehäuses angeordnet ist, um ein reflektiertes Infrarotlichtsignal durch das Schutzglasfenster zu empfangen, wobei das reflektierte Infrarotlichtsignal eine Reflexion des übertragenen Infrarotlichtsignals umfasst, die einer Geste eines Benutzers entspricht; und
eine Verarbeitungseinheit, die innerhalb des Gehäuses angeordnet ist, um ein Signal zu verarbeiten, das dem reflektierten Infrarotlichtsignal entspricht, und ein entsprechendes Steuersignal an eine Steuerfunktion für die Vorrichtung zu senden.

2. Vorrichtung nach Anspruch 1, die ferner eine Platte (114) umfasst, die innerhalb des Gehäuses zwischen dem Schutzglasfenster und dem Infrarotsender und dem Infrarotempfänger angeordnet ist.

3. Vorrichtung nach Anspruch 2, wobei die Platte Folgendes umfasst:
eine Infrarotsenderöffnung, um eine Übertragung des übertragenen Infrarotlichtsignals durch die Platte zu ermöglichen; und
eine Infrarotempfängeröffnung, um einen Empfang des reflektierten Infrarotlichtsignals durch die Platte zu ermöglichen.

4. Vorrichtung nach Anspruch 1, die ferner eine Infrarotabschirmung (118) umfasst, die angrenzend an den Infrarotsender und/oder den Infrarotempfänger angeordnet ist, um den Infrarotsender und/oder den Infrarotempfänger gegen Infrarotlicht abzuschirmen, das mit dem übertragenen Infrarotlichtsignal und/oder dem reflektierten Infrarotlichtsignal interferiert.

5. Vorrichtung nach Anspruch 4, wobei die Infrarotabschirmung eine Leitung umfasst, durch die das übertragene Infrarotlichtsignal und/oder das reflektierte Infrarotlichtsignal hindurchtreten kann.

6. Vorrichtung nach Anspruch 1, wobei der Infrarotsender und der Infrarotempfänger als ein einzelner Infrarotsendeempfänger integriert sind.

7. Vorrichtung nach Anspruch 1, die ferner Folgendes umfasst:
einen zweiten Infrarotsender (108B), der innerhalb des Gehäuses angeordnet ist, um ein zweites übertragenes Infrarotlichtsignal durch das Schutzglasfenster nach außen zu übertragen;
einen zweiten Infrarotempfänger (108A), der innerhalb des Gehäuses angeordnet ist, um ein zweites reflektiertes Infrarotlichtsignal durch das Schutzglasfenster zu empfangen, wobei das zweite reflektierte Infrarotlichtsignal eine Reflexion des zweiten übertragenen Infrarotlichtsignals umfasst, die einer Geste des Benutzers entspricht; und
wobei die Verarbeitungseinheit konfiguriert ist, um das zweite reflektierte Infrarotlichtsignal in eine entsprechende zweite Steuerfunktion für die Vorrichtung zu parsen.

8. Vorrichtung nach Anspruch 7, wobei ein Betrieb des ersten Infrarotsenders und des ersten Infrarotempfängers mit einem Betrieb des zweiten Infrarotsenders und des zweiten Infrarotempfängers abgetastet wird.

9. Vorrichtung nach Anspruch 1, wobei die Geste des Benutzers eine Handbewegung über die Anzeige in Bezug auf die Vorrichtung, eine Handbewegung auf die Anzeige zu oder von ihr weg in Bezug auf die Vorrichtung und/oder eine Handbewegung, die wenigstens einen Abschnitt der Vorrichtung abdeckt, umfasst.

10. Vorrichtung nach Anspruch 1, die ferner Folgendes umfasst:
eine Leiterplatte (112), die innerhalb des Gehäuses angeordnet ist, wobei der Infrarotsender und der Infrarotempfänger mit der Leiterplatte wirkgekoppelt sind; und
ein Speichermedium, das innerhalb des Gehäuses angeordnet ist, um eine Beziehungstabelle von Gesten und zugehörigen Steuerfunktionen für die Gesten zu speichern.

## Revendications

1. Appareil de commande (100), comprenant :
un caisson antidéflagrant (102) comprenant une fenêtre en verre de protection (104) ;
une unité d'affichage visible par l'utilisateur (106) positionnée à l'intérieur du caisson ;
un émetteur infrarouge (108) positionné à l'intérieur du caisson pour émettre un signal lumineux infrarouge émis hors du caisson à travers la fenêtre en verre de protection ;
l'appareil de commande étant **caractérisé par** :
un récepteur infrarouge (110) positionné à l'intérieur du caisson pour recevoir un signal lumineux infrarouge réfléchi à travers la fenêtre en verre de protection, le signal lumineux infrarouge réfléchi comprenant une réflexion du signal lumineux infrarouge émis correspondant à un geste d'un utilisateur ; et
une unité de traitement positionnée à l'intérieur du caisson pour traiter un signal correspondant au signal lumineux infrarouge réfléchi et envoyer un signal de commande correspondant à une fonction de commande de l'appareil.

2. Appareil selon la revendication 1, comprenant en outre un panneau (114) positionné à l'intérieur du caisson entre la fenêtre en verre de protection et l'émetteur infrarouge et le récepteur infrarouge.

3. Appareil selon la revendication 2, dans lequel le panneau comprend :
une ouverture d'émetteur infrarouge pour permettre l'émission du signal lumineux infrarouge émis à travers le panneau ; et
une ouverture de récepteur infrarouge pour permettre la réception du signal lumineux infrarouge réfléchi à travers le panneau.

4. Appareil selon la revendication 1, comprenant en outre une protection contre les infrarouges (118) positionnée adjacente à l'émetteur infrarouge et/ou au récepteur infrarouge pour protéger l'émetteur infrarouge et/ou le récepteur infrarouge de la lumière infrarouge interférant avec le signal lumineux infrarouge émis et/ou le signal lumineux infrarouge réfléchi.

5. Appareil selon la revendication 4, dans lequel la protection contre les infrarouges comprend un conduit par lequel le signal lumineux infrarouge émis et/ou le signal lumineux infrarouge réfléchi doit passer.

6. Appareil selon la revendication 1, dans lequel l'émetteur infrarouge et le récepteur infrarouge sont intégrés en tant qu'un seul émetteur-récepteur infrarouge.

7. Procédé selon la revendication 1, comprenant en outre :
un second émetteur infrarouge (108B) positionné à l'intérieur du caisson pour émettre un second signal lumineux infrarouge émis à travers la fenêtre en verre de protection ;
un second récepteur infrarouge (108A) positionné à l'intérieur du caisson pour recevoir un second signal lumineux infrarouge réfléchi à travers la fenêtre en verre de protection, le second signal lumineux infrarouge réfléchi comprenant une réflexion du second signal lumineux infrarouge émis correspondant à un geste de l'utilisateur ; et
l'unité de traitement étant configurée pour analyser le second signal lumineux infrarouge réfléchi en une seconde fonction de commande correspondante pour l'appareil.

8. Appareil selon la revendication 7, dans lequel le fonctionnement du premier émetteur infrarouge et du premier récepteur infrarouge est stroboscopique avec le fonctionnement du second émetteur infrarouge et du second récepteur infrarouge.

9. Appareil selon la revendication 1, dans lequel le geste de l'utilisateur comprend un mouvement de la main sur l'ensemble de l'unité d'affichage par rapport à l'appareil, et/ou un mouvement de la main vers ou loin de l'unité d'affichage par rapport à l'appareil, et/ou un mouvement de la main qui recouvre au moins une partie de l'appareil.

10. Procédé selon la revendication 1, comprenant en outre :
une carte de circuit imprimé (112) positionnée à l'intérieur du caisson avec l'émetteur infrarouge et le récepteur infrarouge couplés de manière fonctionnelle à la carte de circuit imprimé ; et
un support de stockage positionné à l'intérieur du caisson pour stocker une table de relations des gestes et des fonctions de commande associées pour les gestes.
